# EUROPÄISCHE PATENTANMELDUNG

(11) **EP 4 764 263 A1**
(43) Veröffentlichungstag der Anmeldung: **24.06.2026**
(21) Anmeldenummer: 25211236.2
(22) Anmeldetag: 27.10.2025
(51) Int. Cl.: F16H 61/4104, F16H 61/4165

(54) **HYDRAULISCHES ANTRIEBSSYSTEM**

(30) Priorität: 19.12.2024 DE 102024138812
(71) Anmelder: Hamm AG, 95643 Tirschenreuth (DE)
(72) Erfinder: Klein, Thomas, Mitterteich (DE)
(74) Vertreter: Ruttensperger Lachnit Trossin Gomoll

(57) **Zusammenfassung**

Ein hydraulisches Antriebssystem 24, insbesondere für eine selbstfahrende Baumaschine, umfasst wenigstens eine durch ein Antriebsaggregat (26) zum Fördern von Hydraulikfluid antreibbare Hydraulikpumpe (28), einen von der wenigstens einen Hydraulikpumpe (28) gefördertes Hydraulikfluid aufnehmenden und Hydraulikfluid zu der wenigstens einen Hydraulikpumpe zurück leitenden Hydraulikkreislauf (30), wenigstens einen über den Hydraulikkreislauf (30) mit von der wenigstens einen Hydraulikpumpe (28) gefördertem Hydraulikfluid gespeisten Hydraulikmotor (32, 34), eine Ausspeiseleitungsanordnung (52) zum Ausspeisen von Hydraulikfluid aus dem Hydraulikkreislauf (30) zu einem Hydraulikfluidspeicher (42), wenigstens eine aus dem Hydraulikkreislauf (30) gespeiste Spülleitung (64) zum Spülen wenigstens einer Hydraulikkomponente des hydraulischen Antriebssystems (40) mit Hydraulikfluid, wobei wenigstens eine Spülleitung (64) von der Ausspeiseleitungsanordnung (52) abzweigt oder/und einen Leitungsbereich der Ausspeiseleitungsanordnung (52) bildet.

## Beschreibung

Die vorliegende Erfindung betrifft ein hydraulisches Antriebssystem, welches beispielsweise in einer Baumaschine, wie zum Beispiel Bodenverdichter, dazu genutzt wird, die Baumaschine zur Bewegung über einen Untergrund anzutreiben oder/und Arbeitsgeräte der Baumaschine mit Hydraulikfluid zum Betreiben derselben zu speisen.

Zum Betreiben von Baumaschinen genutzte hydraulische Antriebssysteme umfassen im Allgemeinen wenigstens eine durch ein Antriebsaggregat, beispielsweise ein Dieselaggregat oder einen Elektromotor, zum Fördern von Hydraulikfluid antreibbare Hydraulikpumpe, einen von der wenigstens einen Hydraulikpumpe gefördertes Hydraulikfluid aufnehmenden und Hydraulikfluid zu der wenigstens einen Hydraulikpumpe zurück leitenden Hydraulikkreislauf sowie wenigstens einen über den Hydraulickreislauf mit von der wenigstens einen Hydraulikpumpe gefördertem Hydraulikfluid gespeisten Hydraulikmotor, durch welchen beispielsweise ein oder mehrere Antriebsräder oder eine oder mehrere Bodenbearbeitungswalzen angetrieben werden. Im Betrieb derartiger Hydraulikkomponenten des hydraulischen Antriebssystem bildender Aggregate, wie zum Beispiel der Hydraulikpumpen bzw. Hydraulikmotoren, entsteht Wärme, die aus dem Bereich dieser Hydraulikkomponenten abgeführt werden muss. Hierzu kann dem Hydraulikkreislauf Hydraulikfluid entzogen werden, um dieses beispielsweise parallel zu dem zu einem oder mehreren Hydraulikmotoren geleiteten Hydraulikfluid durch die zu kühlenden Hydraulikkomponenten zu leiten. Dies hat zur Folge, dass die Menge des durch eine oder mehrere Hydraulikpumpen in den Hydraulikkreislauf geförderten Hydraulikfluids bestimmt ist durch die Menge des zum Betreiben eines oder mehrerer Hydraulikmotoren benötigten Hydraulikfluids und die Menge des zum Kühlen einer oder mehrerer Hydraulikkomponenten benötigten Hydraulikfluids.

Aufgrund des vergleichsweise hohen Fluiddrucks des durch die wenigstens eine Hydraulikpumpe geförderten bzw. in den Hydraulikkreislauf eingespeisten Hydraulikfluids entstehen durch das Abzweigen eines Teils dieses unter vergleichsweise hohem Druck stehenden Hydraulikfluids zum Kühlen einer oder mehrerer Hydraulickomponenten des hydraulischen Antriebssystems vergleichsweise hohe Verlustleistungen. Ferner ist die Menge des unter dem vergleichsweise hohen Druck stehenden Fluids, welche durch die zu kühlenden bzw. zu spülenden Hydraulikkomponenten geleitet werden kann, begrenzt, um insbesondere in Kaltstartphasen bei vergleichsweise viskosem Hydraulikfluid, im Allgemeinen Hydrauliköl, einen übermäßigen Druckanstieg in den von dem zum Spülen bzw. Kühlen genutzten Hydraulikfluid durchströmten Hydraulikkomponenten zu vermeiden. Aufgrund dieser unter Berücksichtigung der Druckbegrenzung in Kaltstartphasen erforderlichen Beschränkung der Menge des vom Hydraulikkreislauf abgezweigten Hydraulikfluids besteht die Gefahr, dass bei höheren Temperaturen nicht ausreichend Hydraulikfluid durch die zu kühlenden Hydraulikkomponenten gefördert wird.

Es ist die Aufgabe der vorliegenden Erfindung, ein hydraulisches Antriebssystem, insbesondere für eine Baumaschine, wie zum Beispiel Bodenverdichter, vorzusehen, in welchem bei geringen Verlustleistungen eine effiziente Kühlung von Hydraulickomponenten des hydraulischen Antriebssystems ermöglicht ist.

Erfindungsgemäß wird diese Aufgabe gelöst durch ein hydraulisches Antriebssystem, insbesondere für eine selbstfahrende Baumaschine, umfassend:
- wenigstens eine durch ein Antriebsaggregat zum Fördern von Hydraulikfluid antreibbare Hydraulikpumpe,
- einen von der wenigstens einen Hydraulikpumpe gefördertes Hydraulikfluid aufnehmenden und Hydraulikfluid zu der wenigstens einen Hydraulikpumpe zurückleitenden Hydraulikkreislauf,
- wenigstens einen über den Hydraulikkreislauf mit von der wenigstens einen Hydraulikpumpe gefördertem Hydraulikfluid gespeisten Hydraulikmotor,
- eine Ausspeiseleitungsanordnung zum Ausspeisen von Hydraulikfluid aus dem Hydraulikkreislauf zu einem Hydraulikfluidspeicher,
- wenigstens eine aus dem Hydraulikkreislauf gespeiste Spülleitung zum Spülen wenigstens einer Hydraulikkomponente des hydraulischen Antriebssystems mit Hydraulikfluid.

Wenigstens eine Spülleitung zweigt von der Ausspeiseleitungsanordnung ab oder/und bildet einen Leitungsbereich der Ausspeiseleitungsanordnung.

Bei dem erfindungsgemäß aufgebauten hydraulischen Antriebssystem wird zum Spülen bzw. Kühlen einer oder mehrerer Hydraulikkomponenten in Richtung zu dem Hydraulikfluidspeicher ausgespeistes Hydraulikfluid genutzt, welches im Allgemeinen einen vergleichsweise niedrigen Druck aufweist. Die Gefahr einer mechanischen Überlastung von zu kühlenden Hydraulikkomponenten aufgrund eines zu hohen Drucks des zum Kühlen genutzten Hydraulikfluids kann dadurch bereits deutlich gemindert werden. Weiter ist es nicht erforderlich, zum Bereitstellen des zum Kühlen von Hydraulikkomponenten genutzten Hydraulikfluids die Fördermenge der wenigstens einen Hydraulikpumpe entsprechend zu erhöhen, da das erfindungsgemäß genutzte Hydraulikfluid ohnehin aus dem Hydraulikkreislauf auszuspeisen, also aus diesem in Richtung zum Hydraulikfluidspeicher abzuleiten ist. Dies führt zu einer vergleichsweise niedrigen zum Kühlen einer oder mehrerer Hydraulikkomponenten aufzubringenden Verlustleistung.

Bei einer vor allem unter Berücksichtigung des Hydraulikfluiddrucks besonders vorteilhaften Ausgestaltung wird vorgeschlagen, dass die Ausspeiseleitungsanordnung eine einen Hydraulikfluidkühler enthaltende, zu dem Hydraulikfluidspeicher führende Ausspeise-Kühlleitung und eine parallel zu der Ausspeise-Kühlleitung zu dem Hydraulikfluidspeicher führende Ausspeise-Bypassleitung umfasst, und dass wenigstens eine von der Ausspeiseleitungsanordnung abzweigende Spülleitung von der Ausspeise-Kühlleitung abzweigt oder/und einen Leitungsbereich der Ausspeise-Kühlleitung bildet. Der in einer derartigen Ausspeise-Kühlleitung vorgesehene Hydraulikfluidkühler ist gleichermaßen eine Komponente, welche druckempfindlich ist und mit einem zu hohen Hydraulikfluiddruck nicht beaufschlagt werden darf. Da in einem derartigen Antriebssystem dafür gesorgt ist, dass der Hydraulikfluiddruck des in die Ausspeise-Kühlleitung eingespeisten und über diese zu dem Hydraulikfluidspeicher geleiteten Hydraulikfluids einen vorgegebenen Druck nicht übersteigt, ist gleichzeitig dafür gesorgt, dass das zum Kühlen wenigstens einer Hydraulikkomponente genutzten Hydraulikfluid einen die potentielle Gefahr der Beschädigung derselben ausschließenden, vergleichsweise niedrigen Hydraulikfluiddruck aufweist.

Wenigstens eine Spülleitung kann stromaufwärts des Hydraulikfluidkühlers von der Ausspeise-Kühlleitung abzweigen oder/und einen stromaufwärts des Hydraulikfluidkühlers liegenden Leitungsbereich der Ausspeise-Kühlleitung bilden. Dies ermöglicht eine derartige Struktur, bei welcher wenigstens eine Spülleitung zu dem Hydraulikfluidkühler parallel angeordnet ist, so dass diese Spülleitung und der Hydraulikfluidkühler jeweils von einem Teil des die Ausspeise-Kühlleitung durchströmenden Hydraulikfluids durchströmt werden. Dadurch kann der eine zu kühlende Hydraulikkomponente beaufschlagende Hydraulikfluiddruck weiter gesenkt werden.

Alternativ oder zusätzlich kann vorgesehen sein, dass wenigstens eine Spülleitung stromabwärts des Hydraulikfluidkühlers von der Ausspeise-Kühlleitung abzweigt oder/und einen stromabwärts des Hydraulikfluidkühlers liegenden Leitungsbereich der Ausspeise-Kühlleitung bildet. Diese Ausgestaltung nutzt den besonderen Vorteil, dass das in die Spülleitung einströmende Hydraulikfluid im weiter stromaufwärts liegenden Hydraulikfluidkühler bereits gekühlt wird und somit besonders effizient zum Kühlen der wenigstens einen, dieser Spülleitung zugeordneten Hydraulikkomponente genutzt werden kann.

Unabhängig davon, ob eine Spülleitung stromaufwärts oder stromabwärts des Hydraulikfluidkühlers von der Ausspeise-Kühlleitung abzweigt, kann wenigstens eine Spülleitung zu dem Hydraulikfluidkühler seriell angeordnet sein.

Um die Ausspeise-Bypassleitung definiert zur Durchströmung freigeben bzw. gegen Durchströmung absperren zu können und dadurch den Anteil des durch die Ausspeise-Kühlleitung strömenden und den Hydraulikfluidkühler somit mechanisch belastenden Hydraulikfluids einstellen zu können, kann der Ausspeise-Bypassleitung ein Bypass-Ventil zugeordnet sein, wobei das Bypass-Ventil zwischen einer die Ausspeise-Bypassleitung, vorzugsweise vollständig, gegen Durchströmung mit Hydraulikfluid abschließenden Schließstellung und einer die Ausspeise-Bypassleitung zur Durchströmung mit Hydraulikfluid, vorzugsweise maximal, freigebenden Offenstellung verstellbar ist.

Dabei ist es zum Vermeiden einer mechanischen Überlastung des Hydraulikfluidkühlers durch einen zu hohen Hydraulikfluiddruck vorteilhaft, wenn das Bypass-Ventil in Abhängigkeit einer Hydraulikfluidtemperatur beispielsweise von die Ausspeiseleitungsanordnung durchströmendem Hydraulikfluid verstellbar ist.

Insbesondere kann hierfür vorgesehen sein, dass das Bypass-Ventil bei unter einer Schalttemperatur liegender Hydraulikfluidtemperatur zur Durchströmung, vorzugsweise maximal, offen ist und bei über der Schalttemperatur liegender Hydraulikfluidtemperatur gegen Durchströmung wenigstens teilweise, vorzugsweise vollständig, geschlossen ist. Weist das Hydraulikfluid eine vergleichsweise hohe Temperatur auf, hat es aufgrund seiner geringeren Viskosität im Allgemeinen einen geringeren Fluiddruck, so dass bei höherer Hydraulikfluidtemperatur eine mechanische Überlastung des Hydraulikfluidkühlers im Wesentlichen ausgeschlossen werden kann. Da bei geringerer Temperatur des Hydraulikfluids durch Öffnen des Bypass-Ventils ein Großteil des ausgespeisten Hydraulikfluids durch die Ausspeise-Bypassleitung strömen kann, kann auch bei vergleichsweise viskosem Hydraulikfluid der Druck des Hydraulikfluids in der Ausspeiseleitungsanordnung gesenkt werden bzw. auf einem niedrigen Druckniveau gehalten werden, so dass ein gegebenenfalls noch durch den Hydraulikfluidkühler strömender Teil des vergleichsweise kalten und somit viskosen Hydraulikfluids nicht zu einer mechanischen Überlastung des Hydraulikfluidkühlers führen kann.

Alternativ oder zusätzlich kann vorgesehen sein, dass das Bypass-Ventil in Abhängigkeit von einem Hydraulikfluiddruck beispielsweise in der Ausspeiseleitungsanordnung zwischen der Schließstellung und der Offenstellung verstellbar ist.

Hierzu kann beispielsweise das Bypass-Ventil bei über einem Schaltdruck liegendem Hydraulikfluiddruck zur Durchströmung, vorzugsweise maximal, offen sein und bei unter dem Schaltdruck liegendem Hydraulikfluiddruck gegen Durchströmung wenigstens teilweise, vorzugsweise vollständig, geschlossen sein. Auch auf diese Art und Weise ist gewährleistet, dass insbesondere in einer Kaltstartphase, in welcher das Hydraulikfluid eine vergleichsweise hohe Viskosität aufweist, eine übermäßige Belastung des Hydraulikfluidkühlers nicht auftritt.

Das Bypass-Ventil kann beispielsweise umfassen:
- ein Thermostatventil, also ein Ventil, welches beispielsweise bei Erreichen einer Schalttemperatur schaltet,
   oder
- ein Rückschlagventil, als ein Ventil, welches beispielsweise bei Erreichen eines Schaltdrucks schaltet,
   oder
- ein druckabhängig oder/und temperaturabhängig elektrisch schaltbares Ventil, also ein Ventil, welches unter einer den Druck des Hydraulikfluid oder/und die Temperatur des Hydraulikfluid als Eingangsgröße berücksichtigenden Ansteuerung steht und dementsprechend druckabhängig oder/und temperaturabhängig geschaltet wird.

Bei dem erfindungsgemäßen hydraulischen Antriebssystem kann wenigstens eine Hydraulikpumpe eine vermittels wenigstens einer Spülleitung zu spülende Hydraulickomponente sein. Alternativ oder zusätzlich kann wenigstens ein Hydraulikmotor eine vermittels wenigstens einer Spülleitung zu spülende Hydraulikkomponente sein.

Es ist darauf hinzuweisen, dass im Sinne der vorliegenden Erfindung als Hydraulikmotoren nicht nur Aggregate zu verstehen sind, welche ein Antriebsdrehmoment zum Antreiben von Rädern, beispielsweise Antriebsräder oder Kettenräder oder dergleichen, generieren, sondern jedwede Art von Aggregaten, die durch Beaufschlagung mit einem Druckfluid eine Antriebskraft oder ein Antriebsdrehmoment generieren. Beispielsweise sind im Sinne der vorliegenden Erfindung auch HydraulicKolben/Zylinder-Einheiten, welche zum Bewegen von Komponenten oder Arbeitsgeräten an Baumaschinen eingesetzt werden, als mit Hydraulikfluid vermittels einer oder mehrerer Hydraulikpumpen gespeiste Antriebsmotoren zu betrachten.

Die Erfindung betrifft ferner eine Bodenbearbeitungsmaschine, vorzugsweise Bodenverdichter, umfassend ein erfindungsgemäß aufgebautes hydraulisches Antriebssystem.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgebildeten selbstfahrenden Baumaschine;
- Fig. 2: ein Schaltbild eines hydraulischen Antriebssystems beispielsweise für die in Fig. 1 dargestellte Baumaschine;
- Fig. 3: ein Schaltbild eines alternativ ausgebildeten hydraulischen Antriebssystems beispielsweise für die in Fig. 1 dargestellte Baumaschine.

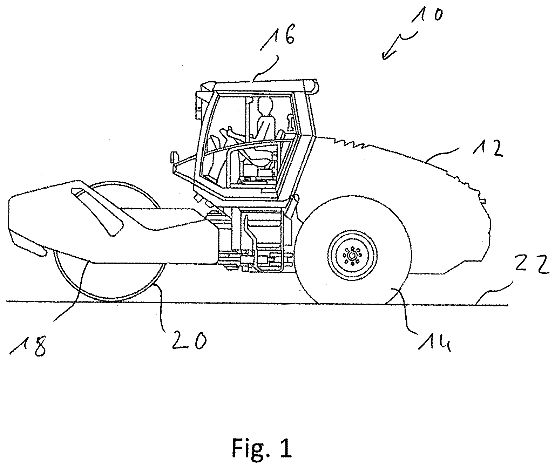

In Fig. 1 ist eine in Form eines Bodenverdichters ausgebildete selbstfahrende Baumaschine 10 in Seitenansicht dargestellt. Die Baumaschine 10 umfasst an einem Hinterwagen 12 beidseits durch ein ebenfalls am Hinterwagen 12 vorgesehenes Antriebsaggregat zur Drehung antreibbare Antriebsräder 14. Am Hinterwagen 12 ist ferner ein Bedienstand 16 für eine die Baumaschine 10 bedienende Bedienperson vorgesehen.

An einem zum Lenken der Baumaschine 10 schwenkbar mit dem Hinterwagen 12 verbundenen Vorderwagen 18 ist eine Bodenbearbeitungswalze 20 vorgesehen. Bei Bewegung der Baumaschine 10 über einen zu bearbeitenden Untergrund 22 rollt die Bodenbearbeitungswalze 20 auf diesem ab. Je nach Oberflächengestaltung der Bodenbearbeitungswalze kann diese den überfahrenen Untergrund 22 verdichten oder, bei strukturierter Oberfläche, dazu dienen, einen festen Untergrund, beispielsweise einen Betonuntergrund, zu zerbrechen.

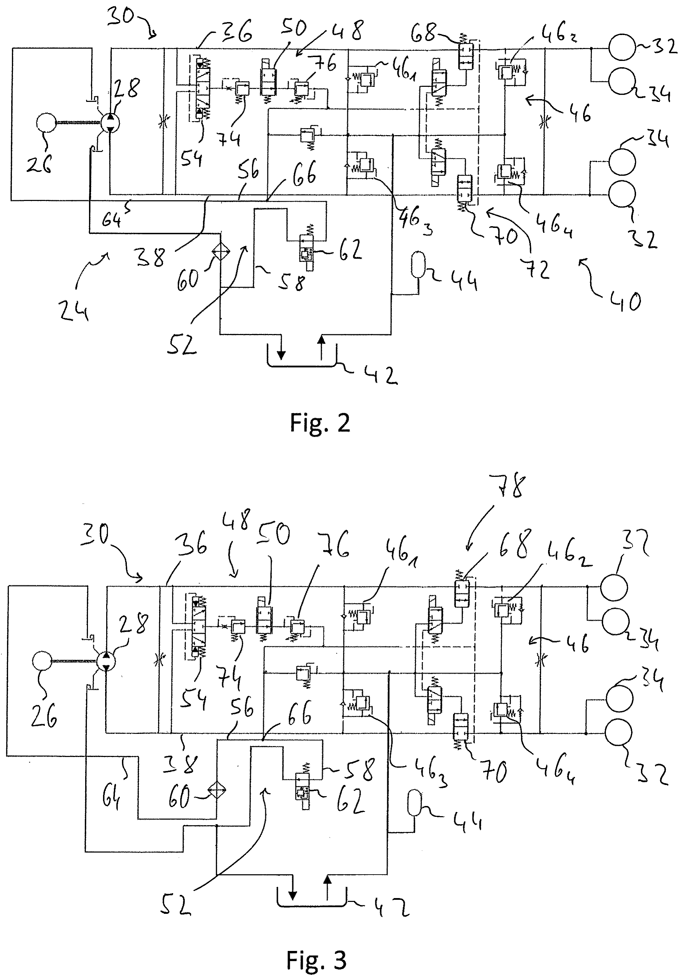

Bevor nachfolgend mit Bezug auf die Fig. 2 und 3 ein hydraulisches Antriebssystem für eine derartige Bodenbearbeitungsmaschine 10 detailliert beschrieben wird, ist darauf hinzuweisen, dass die in Fig. 1 dargestellte selbstfahrende Baumaschine 10 nur ein Beispiel für derartige Baumaschinen ist. Bei Ausgestaltung der Baumaschine 10 als Bodenverdichter könnte diese auch am Hinterwagen 12 eine Bodenbearbeitungswalze aufweisen, wobei dann eine oder beide Bodenbearbeitungswalzen zum Bewegen der Baumaschine 10 über den Untergrund 22 zur Drehung angetrieben sein kann. Auch die Ausgestaltung als schemelgelenkter Bodenverdichter, als Radlader oder dergleichen ist möglich. Auch kann eine derartige Baumaschine 10 Kettenfahrwerke aufweisen, beispielsweise bei Ausgestaltung derselben als Planierraupe, oder dergleichen.

In Fig. 2 ist ein hydraulisches Antriebssystem 24 für eine derartige selbstfahrende Baumaschine 10 hinsichtlich seiner wesentlichen Systembereiche dargestellt. Das hydraulische Antriebssystem 24 umfasst eine durch ein Antriebsaggregat 26 angetriebene Hydraulikpumpe 28. Bei konventioneller Ausgestaltung kann das Antriebsaggregat 26 beispielsweise durch eine Diesel-Brennkraftmaschine bereitgestellt sein. Bei Ausgestaltung als elektrohydraulisches Antriebssystem kann das Antriebsaggregat auch einen Elektromotor umfassen.

Das hydraulische Antriebssystem 24 umfasst ferner einen Hydraulikkreislauf 30, über welchen im dargestellten Ausgestaltungsbeispiel zwei Hydraulikmotoren 32, 34, die mit der Hydraulikpumpe 28 in hydraulischer Verbindung stehen, um diesen unter Druck stehendes Hydraulikfluid, im Allgemeinen Hydrauliköl, zuzuführen bzw. Hydraulikfluid von diesen zurückzuspeisen.

Der Hydraulikkreislauf 30 umfasst einen die Hydraulikpumpe 28 mit den beiden Hydraulikmotoren 32, 34 verbindenden ersten Leitungsbereich 36 und einen die Hydraulikpumpe 28 mit den beiden Hydraulikmotoren 32, 34 zu verbindenden zweiten Leitungsbereich 38. Je nach vorgesehener Bewegungsrichtung und dementsprechend Drehrichtung der Hydraulikmotoren 32, 34 wird das von der Hydraulikpumpe 28 abgegebene Hydraulikfluid über den Leitungsbereich 36 zu den Hydraulikmotoren 32, 34 geleitet und über den zweiten Hydraulikbereich 38 wieder zur Hydraulikpumpe 28 zurückgefördert, oder wird Hydraulikfluid über den zweiten Leitungsbereich 38 zu den beiden Hydraulikmotoren 32, 34, welche beispielsweise bei der in Fig. 1 dargestellten Baumaschine 10 jeweils einem der seitlich am Hinterwagen 12 angeordneten Antriebsräder 14 zugeordnet sein können, geleitet und wird über den ersten Leitungsbereich 36 zur Hydraulikpumpe 28 zurück gefördert.

Obgleich der in Fig. 2 dargestellte Hydraulikkreislauf 30 grundsätzlich ein geschlossener Kreislauf ist, ist es erforderlich, in verschiedenen Zuständen des hydraulischen Antriebssystems 24 Hydraulikfluid aus einem Hydraulikfluidspeicher 42 oder einem zugeordneten Druckfluidspeicher 44 in den Hydraulikkreislauf 30 nachzuspeisen oder Hydraulikfluid aus dem Hydraulikkreislauf 30 auszuspeisen. Das Nachspeisen von Hydraulikfluid kann beispielsweise erforderlich werden, wenn aufgrund unvermeidbarer Leckagen beispielsweise in den Hydraulikmotoren 32, 34 oder in der Hydraulikpumpe 28 der Druck im Hydraulikkreislauf 30 insbesondere an einer Niederdruckseite des unter einem zugeordneten Schwellenwert abfällt oder wenn aktiv beispielsweise aufgrund zu hoher Temperatur des Hydraulikfluids im Hydraulikfluidkreislauf Hydraulikfluid ausgespeist wird.

Zum Nachspeisen des Hydraulikfluids ist eine allgemein mit 46 bezeichnete Einspeise-Ventilanordnung vorgesehen. Die Einspeise-Ventilanordnung 46 umfasst in Zuordnung zum ersten Leitungsbereich 36 des Hydraulikfluidkreislaufs 30 zwei erste Einspeiseventile 46₁, 46₂, und umfasst in Zuordnung zum zweiten Leitungsbereich 38 des Hydraulikfluidkreislaufs 30 zweite Einspeiseventile 46₃, 46₄. Je nachdem, ob Sperrventile 68, 70 einer Betriebsbremse 72 in dem in den Fig. 2 und 3 dargestellten Sperrzustand sind, in welchem die Betriebsbremse aktiv ist, oder in einem Freigabezustand sind, in welchem das von der Hydraulikpumpe 28 geförderte Hydraulikfluid über die Leitungsbereiche 36, 38 die Hydraulikmotoren 32, 34 durchströmen kann, wird das aus dem Hydraulikfluidspeicher 42 über eine in den Figuren nicht dargestellte Hydraulikpumpe bzw. aus dem Druckfluidspeicher 44 nachgespeiste Hydraulikfluid über ein im jeweiligen Betriebszustand dann mit der Niederdruckseite verbundenes Einspeiseventil der vier Einspeiseventile 46₁, 46₂, 46₃, 46₄ in den Hydraulikfluidkreislauf 30 nachgespeist.

Zum Ausspeisen von Hydraulikfluid ist eine allgemein mit 48 bezeichnete Ausspeise-Ventilanordnung vorgesehen. Diese umfasst ein Sperrventil 50, welches den Strömungsweg zu einer allgemein mit 52 bezeichneten Ausspeiseleitungsanordnung entweder freigibt oder unterbricht und diesem vorgeschaltet ein Stellventil 54, welches das Sperrventil 50 wahlweise mit dem ersten Leitungsbereich 36, dem zweiten Leitungsbereich 38 oder keinem dieser Leitungsbereiche verbindet. Auf diese Art und Weise kann sichergestellt werden, dass das Ausspeisen von Hydraulikfluid immer auf der Niederdruckseite des Hydraulikkreislaufs 30, also aus demjenigen Leitungsbereich von erstem Leitungsbereich 36 und zweitem Leitungsbereich 38, erfolgt, der dazu genutzt wird, das durch die Hydraulikpumpe 28 geförderte Hydraulikfluid nach dem Durchströmen der beiden Hydraulikmotoren 32, 34 wieder zur Hydraulikpumpe 28 zurückzuleiten. Die Ausspeise-Ventilanordnung 48 umfasst ferner in Strömungsrichtung zwischen den beiden Ventilen 50, 54 und stromabwärts des Sperrventils 50 Druckhalteventile 74, 76, welche gewährleisten, dass in Folge eines Ausspeisevorgangs der Fluiddruck im Hydraulikfluidkreislauf 30 nicht unter ein bestimmtes minimales Druckniveau absinken kann.

Die Ausspeiseleitungsanordnung 52 umfasst eine Ausspeise-Kühlleitung 56 und parallel dazu eine Ausspeise-Bypassleitung 58. Sowohl die Ausspeise-Kühlleitung 56, als auch die Ausspeise-Bypassleitung 58 führt zum Hydraulikfluidspeicher 42.

In der Ausspeise-Kühlleitung 56 ist ein Hydraulikfluidkühler 60 vorgesehen, in welchem aus dem Hydraulikkreislauf 30 ausgespeistes Hydraulikfluid Wärme beispielsweise auf die Umgebungsluft übertragen kann, um zumindest einen Teil des ausgespeisten Hydraulikfluids vor dem Einleiten in den Hydraulikfluidspeicher 42 zu kühlen.

In der Ausspeise-Bypassleitung 58 ist ein Bypass-Ventil 62 vorgesehen, welches in einer Schließstellung die Ausspeise-Bypassleitung 58 vorzugsweise vollständig gegen Durchströmung mit Hydraulikfluid abschließt, so dass das gesamte ausgespeiste Hydraulikfluid durch die Ausspeise-Kühlleitung 56 und den darin vorgesehenen Hydraulikfluidkühler 60 strömt, und in seiner Offenstellung die Ausspeise-Bypassleitung 58 in maximalem Ausmaß zur Durchströmung mit Hydraulikfluid freigibt. Aufgrund des in diesem Zustand im Vergleich zum Strömungswiderstand des Hydraulikfluidkühlers 60 vergleichsweise geringen Strömungswiderstands des Bypass-Ventils 62 wird in der Offenstellung des Bypass-Ventils 62 ein wesentlicher Anteil des ausgespeisten Hydraulikfluids durch die Ausspeise-Bypassleitung 58 zum Hydraulikfluidspeicher 42 strömen.

Das Bypass-Ventil kann beispielsweise als Thermostat-Ventil ausgebildet sein, welches bei Erreichen einer Schalttemperatur des Hydraulikfluids beispielsweise im Bereich von etwa 60 °C von seiner Offenstellung in seine Schließstellung umschaltet, so dass bei unter der Schalttemperatur liegender Temperatur des Hydraulikfluids die Ausspeise-Bypassleitung 58 zur Durchströmung freigegeben ist und somit bei vergleichsweise viskosem, also zähflüssigem Hydraulikfluid, die Belastung des Hydraulikfluidkühlers 60 aufgrund eines zu hohen Fluiddrucks vermieden wird. Bei Erreichen der Schalltemperatur, also bei höherer Temperatur und damit geringerer Viskosität des Hydraulikfluids geht das Bypass-Ventil 62 in seine Schließstellung über, so dass gewährleistet ist, dass bei nicht übermäßig starker Druckbelastung des Hydraulikfluidkühlers 60 das in Richtung zum Hydraulikfluidspeicher 42 geleitete Hydraulikfluid in ausreichendem Maße gekühlt wird.

Bei einer alternativen Ausgestaltung könnte das Bypass-Ventil 62 als Rückschlagventil ausgebildet sein, welches bei geringerer Temperatur des Hydraulikfluids und damit höherer Viskosität des Hydraulikfluids aufgrund eines vergleichsweise großen Druckabfalls in seine Offenstellung geschaltet ist und bei zunehmender Temperatur des Hydraulikfluids und damit abnehmender Viskosität aufgrund des dann auch abnehmenden Druckabfalls in seine Schließstellung schaltet und somit dafür sorgt, dass mit zunehmender Temperatur des Hydraulikfluids dieses zum Durchströmen des Hydraulikfluidkühlers 60 in die Ausspeise-Kühlleitung 56 geleitet wird.

Weiter könnte das Bypass-Ventil 62 als unter der Ansteuerung einer Ansteuereinheit stehendes, elektrisch schaltbares Ventil ausgebildet sein. Als Eingangsgröße zum Schalten eines derartigen Ventils kann wiederum der Druck des Hydraulikfluids oder/und dessen Temperatur berücksichtigt werden, so dass wieder gewährleistet ist, dass bei vergleichsweise niedriger Temperatur des Hydraulikfluids und dementsprechend vergleichsweise großem am Hydraulikfluidkühler 60 sich aufbauenden Druckabfall durch Öffnen eines derartigen Ventils die Ausspeise-Bypassleitung 58 freigegeben wird und damit zum Vermeiden eines übermäßig großen Druckaufbaus am Hydraulikfluidkühler 60 ein größerer Teil des Hydraulikfluids über die Ausspeise-Bypassleitung 58 abgeleitet wird. Bei ausreichend hoher Temperatur und geringer Viskosität des Hydraulikfluids und dementsprechend geringem Druckaufbau am Hydraulikfluidkühler 60 kann das elektrisch schaltbare Ventil in seine Schließstellung gestellt werden, um eine ausreichende Kühlung des aus dem Hydraulikkreislauf 30 ausgespeisten Hydraulikfluids zu gewährleisten.

Das Bypass-Ventil 62 kann unabhängig von seiner Bauart auch so beschaffen sein, dass dieses einen im Wesentlichen kontinuierlichen Übergang zwischen seiner Offenstellung und seiner Schließstellung temperaturabhängig oder/und druckabhängig durchführt, so dass, kommend aus einer Kaltstartphase mit vergleichsweise kaltem und daher viskosem Hydraulikfluid, das Bypass-Ventil 62 mit zunehmender Temperatur und dementsprechend abnehmender Viskosität des Hydraulikfluids allmählich von seiner Offenstellung in seine Schließstellung übergeht und damit ein zunehmender Anteil des ausgespeisten Hydraulikfluids über den Hydraulikfluidkühler 60 strömt.

Da die druckabhängige bzw. temperaturabhängige Verstellung des Bypass-Ventils 62 primär dazu dient, den Hydraulikfluidkühler 60 vor einer Überlastung und einer damit möglicherweise einhergehenden Beschädigung zu schützen, kann die zum Verstellen des Bypass-Ventils 62 berücksichtigte Größe, also die Temperatur bzw. der Druck, beispielsweise im Bereich des Hydraulikfluidkühlers 60 erfasst werden. Beispielsweise können stromaufwärts und stromabwärts des Hydraulikfluidkühlers 60 in der Ausspeise-Kühlleitung 56 Drucksensoren vorgesehen sein, um die am Hydraulikfluidkühler 60 sich einstellende Druckdifferenz zu erfassen und abhängig davon das Bypass-Ventil 62 zu öffnen oder zu schließen. Auch die Temperatur des Hydraulikfluids kann, sofern diese als Stellgröße berücksichtigt wird, im Bereich des Hydraulikfluidkühlers 60, beispielsweise stromaufwärts davon, erfasst werden. Selbstverständlich ist auch die Berücksichtigung von Temperatur- oder/und Druckwerten an anderen Bereichen des Hydraulikkreislaufs 30, beispielsweise im Bereich des Hydraulikfluidspeichers 42, möglich, wenn diese einen ausreichenden Rückschluss auf die temperaturabhängig bzw. druckabhängig sich ergebende mechanische Belastung des Hydraulikfluidkühlers 60 zulassen.

Das hydraulische Antriebssystem 40 umfasst ferner eine Spülleitung 64, welche in dem in Fig. 2 dargestellten Ausgestaltungsbeispiel von der Ausspeise-Kühlleitung 56 stromaufwärts des Hydraulikfluidkühlers 60 abzweigt bzw. einen stromaufwärts des Hydraulikfluidkühlers 60 liegenden Leitungsbereich der Ausspeiseleitungsanordnung 52 bzw. der Ausspeise-Kühlleitung 56 bereitstellt. Über die Spülleitung 64 wird die Ausspeise-Kühlleitung 56 durchströmendes Hydraulikfluid zu einer mit Hydraulikfluid zu spülenden und dadurch auch zu kühlenden Hydraulikkomponente des hydraulischen Antriebssystems 40 geleitet. In dem in Fig. 2 dargestellten Ausgestaltungsbeispiel bildet die Hydraulikpumpe 28 eine derartige Hydraulikkomponente, welcher aus dem Hydraulikkreislauf 30 ausgespeistes Hydraulikfluid zugeführt wird, um im Bereich der Hydraulikpumpe 28 generierte Wärme abzuführen und das die Wärme aufnehmende Fluid vor Einleitung in den Hydraulikspülspeicher 42 im Hydraulikfluidkühler 60 zu kühlen.

Da im dargestellten Ausgestaltungsbeispiel auch die Hydraulikpumpe 28 eine Hydraulikkomponente ist, die insbesondere in den vom Hydraulikfluid durchströmten Systembereichen vor übermäßig hohen Drücken geschützt werden soll, ist es besonders vorteilhaft, die Spülleitung 64 in die Ausspeise-Kühlleitung 56 zu integrieren bzw. von dieser abzuzweigen, da durch die vorangehend beschriebene Funktion des Bypass-Ventils 62 die Ausspeise-Kühlleitung 56 und somit auch die Spülleitung 64 nur dann von dem bzw. einem größeren Teil des ausgespeisten Hydraulikfluids durchströmt wird, wenn dessen Temperatur ausreichend hoch bzw. dessen Viskosität ausreichend nieder ist. Aus diesem Grunde ist es beispielsweise auch vorteilhaft, bei temperaturabhängiger bzw. druckabhängiger Schaltung des Bypass-Ventils 62 die Temperatur bzw. den Druck des ausgespeisten Hydraulikfluids auch stromaufwärts der Spülleitung 64 bzw. stromaufwärts der vermittels der Spülleitung 64 zu spülenden bzw. zu kühlenden Hydraulikkomponente zu erfassen. Beispielsweise könnte an einem Abzweigungspunkt 66, also dort, wo in der Ausspeiseleitungsanordnung 52 die Ausspeise-Bypassleitung 58 einerseits und die Ausspeise-Kühlleitung 56 bzw. die Spülleitung 64 andererseits voneinander abzweigen, einen Temperatursensor oder einen Drucksensor zur Erfassung der jeweils zu berücksichtigenden Größe vorzusehen.

Eine alternative Ausgestaltungsform des hydraulischen Antriebssystems 40 ist in Fig. 3 dargestellt. Diese entspricht insbesondere hinsichtlich des Aufbaus des Hydraulickreislaufs 30 der Ausgestaltungsform der Fig. 2, so dass auf die voranstehenden Ausführungen verwiesen werden kann.

Ein wesentlicher Unterschied zu der in Fig. 2 dargestellten Ausgestaltungsform besteht darin, dass die Spülleitung 64 stromabwärts des Hydraulikfluidkühlers 60 von der Ausspeise-Kühlleitung 56 abzweigt bzw. einen Leitungsbereich der Ausspeise-Kühlleitung 56 stromabwärts des Hydraulikfluidkühlers 60 bildet. Diese Variante hat den Vorteil, dass das aus dem Hydraulikkreislauf 30 ausgespeiste und in die Ausspeise-Kühlleitung 56 eingeleitete Hydraulikfluid vor dem Durchströmen der zu kühlenden Hydraulikkomponente, im dargestellten Ausgestaltungsbeispiel der Hydraulikpumpe 28, im Hydraulikfluidkühler 60 bereits gekühlt wird, so dass eine effizientere Kühlung der Hydraulikkomponente, hier also der Hydraulikpumpe 28, realisiert werden kann.

Grundsätzlich könnte die Spülleitung 64 auch parallel zum Hydraulikfluidkühler 60 und damit selbstverständlich auch parallel zur Hydraulik-Bypassleitung 58 geführt sein. So wie in Fig. 2 dargestellt, könnte die Spülleitung 64 stromaufwärts des Hydraulikfluidkühlers 60 von der Ausspeise-Kühlleitung 56 abzweigen und, so wie in Fig. 3 dargestellt, stromabwärts des Hydraulikfluidkühlers 60 wieder in die Ausspeise-Kühlleitung 56 einmünden. Auch bei dieser Variante werden die dann parallel zueinander durchströmten Systembereiche Hydraulikfluidkühler 60 und Hydraulikpumpe 28 nur von ausgespeistem Hydraulikfluid durchströmt, wenn die Ausspeise-Kühlleitung 56 zur Durchströmung mit einem wesentlichen Anteil des ausgespeisten Hydraulikfluids freigegeben bzw. die Ausspeise-Bypassleitung 58 durch das Bypass-Ventil 62 gegen Durchströmung abgeschlossen ist.

Auch ist es möglich, die beiden in den Fig. 2 und 3 dargestellten Varianten zu kombinieren, um somit mehrere Hydraulikkomponenten des hydraulischen Antriebssystems 40 mit ausgespeistem Hydraulikfluid zu kühlen. Weiter kann in die Spülleitung 64 eine Mehrzahl von zu kühlenden Hydraulikkomponenten seriell oder/und parallel zueinander eingegliedert sein, um nicht bzw. nicht nur die Hydraulikpumpe 28, sondern beispielsweise auch die Hydraulikmotoren 32, 34 vermittels des ausgespeisten Hydraulikfluids zu kühlen.

## Patentansprüche

1. Hydraulisches Antriebssystem, insbesondere für eine selbstfahrende Baumaschine, umfassend:
- wenigstens eine durch ein Antriebsaggregat (26) zum Fördern von Hydraulikfluid antreibbare Hydraulikpumpe (28),
- einen von der wenigstens einen Hydraulikpumpe (28) gefördertes Hydraulikfluid aufnehmenden und Hydraulikfluid zu der wenigstens einen Hydraulikpumpe zurückleitenden Hydraulikkreislauf (30),
- wenigstens einen über den Hydraulikkreislauf (30) mit von der wenigstens einen Hydraulikpumpe (28) gefördertem Hydraulikfluid gespeisten Hydraulikmotor (32, 34),
- eine Ausspeiseleitungsanordnung (52) zum Ausspeisen von Hydraulikfluid aus dem Hydraulikkreislauf (30) zu einem Hydraulikfluidspeicher (42),
- wenigstens eine aus dem Hydraulikkreislauf (30) gespeiste Spülleitung (64) zum Spülen wenigstens einer Hydraulikkomponente des hydraulischen Antriebssystems (40) mit Hydraulikfluid,
wobei wenigstens eine Spülleitung (64) von der Ausspeiseleitungsanordnung (52) abzweigt oder/und einen Leitungsbereich der Ausspeiseleitungsanordnung (52) bildet.

2. Hydraulisches Antriebssystem nach Anspruch 1,
**dadurch gekennzeichnet, dass** die Ausspeiseleitungsanordnung (52) eine einen Hydraulikfluidkühler (60) enthaltende, zu dem Hydraulikfluidspeicher (42) führende Ausspeise-Kühlleitung (56) und eine parallel zu der Ausspeise-Kühlleitung (56) zu dem Hydraulikfluidspeicher (42) führende Ausspeise-Bypassleitung (58) umfasst, und dass wenigstens eine von der Ausspeiseleitungsanordnung (52) abzweigende Spülleitung (64) von der Ausspeise-Kühlleitung (56) abzweigt oder/und einen Leitungsbereich der Ausspeise-Kühlleitung (56) bildet.

3. Hydraulisches Antriebssystem nach Anspruch 2,
**dadurch gekennzeichnet, dass** wenigstens Spülleitung (64) stromaufwärts des Hydraulikfluidkühlers (60) von der Ausspeise-Kühlleitung (56) abzweigt oder/und einen stromaufwärts des Hydraulikfluidkühlers (60) liegenden Leitungsbereich der Ausspeise-Kühlleitung (56) bildet.

4. Hydraulisches Antriebssystem nach Anspruch 3,
**dadurch gekennzeichnet, dass** wenigstens eine Spülleitung zu dem Hydraulikfluidkühler (60) parallel angeordnet ist.

5. Hydraulisches Antriebssystem nach einem der Ansprüche 2-4,
**dadurch gekennzeichnet, dass** wenigstens eine Spülleitung (64) stromabwärts des Hydraulikfluidkühlers (60) von der Ausspeise-Kühlleitung (56) abzweigt oder/und einen stromabwärts des Hydraulikfluidkühlers (60) liegenden Leitungsbereich der Ausspeise-Kühlleitung (56) bildet.

6. Hydraulisches Antriebssystem nach einem der Ansprüche 2-5,
**dadurch gekennzeichnet, dass** wenigstens eine Spülleitung (64) zu dem Hydraulikfluidkühler (60) seriell angeordnet ist.

7. Hydraulisches Antriebssystem nach einem der Ansprüche 2-6,
**dadurch gekennzeichnet, dass** der Ausspeise-Bypassleitung (58) ein Bypass-Ventil (62) zugeordnet ist, wobei das Bypass-Ventil (62) zwischen einer die Ausspeise-Bypassleitung (58), vorzugsweise vollständig, gegen Durchströmung mit Hydraulikfluid abschließenden Schließstellung und einer die Ausspeise-Bypassleitung (58) zur Durchströmung mit Hydraulikfluid, vorzugsweise maximal, freigebenden Offenstellung verstellbar ist.

8. Hydraulisches Antriebssystem nach Anspruch 7,
**dadurch gekennzeichnet, dass** das Bypass-Ventil (62) in Abhängigkeit einer Hydraulikfluidtemperatur, vorzugsweise von die Ausspeiseleitungsanordnung (52) durchströmendem Hydraulikfluid, zwischen der Schließstellung und der Offenstellung verstellbar ist.

9. Hydraulisches Antriebssystem nach Anspruch 8,
**dadurch gekennzeichnet, dass** das Bypass-Ventil (62) bei unter einer Schalttemperatur liegender Hydraulikfluidtemperatur zur Durchströmung, vorzugsweise maximal, offen ist und bei über der Schalttemperatur liegender Hydraulikfluidtemperatur gegen Durchströmung wenigstens teilweise, vorzugsweise vollständig, geschlossen ist.

10. Hydraulisches Antriebssystem nach einem der Ansprüche 7-9
**dadurch gekennzeichnet, dass** das Bypass-Ventil (62) in Abhängigkeit von einem Hydraulikfluiddruck, vorzugsweise in der Ausspeiseleitungsanordnung (52), zwischen der Schließstellung und der Offenstellung verstellbar ist.

11. Hydraulisches Antriebssystem nach Anspruch 10,
**dadurch gekennzeichnet, dass** das Bypass-Ventil (62) bei über einem Schaltdruck liegendem Hydraulikfluiddruck zur Durchströmung, vorzugsweise maximal, offen ist und bei unter dem Schaltdruck liegendem Hydraulikfluiddruck gegen Durchströmung wenigstens teilweise, vorzugsweise vollständig, geschlossen ist.

12. Hydraulisches Antriebssystem nach einem der Ansprüche 7-11
**dadurch gekennzeichnet, dass** das Bypass-Ventil (62) umfasst:
- ein Thermostatventil,
oder
- ein Rückschlagventil,
oder
- ein druckabhängig oder/und temperaturabhängig elektrisch schaltbares Ventil.

13. Hydraulisches Antriebssystem nach einem der Ansprüche 1-12,
**dadurch gekennzeichnet, dass** wenigstens eine Hydraulikpumpe (28) eine vermittels wenigstens einer Spülleitung (64) zu spülende Hydraulikkomponente ist.

14. Hydraulisches Antriebssystem nach einem der Ansprüche 1-13,
**dadurch gekennzeichnet, dass** wenigstens ein Hydraulikmotor (32, 34) eine vermittels wenigstens einer Spülleitung (64) zu spülende Hydraulikkomponente ist.

15. Bodenbearbeitungsmaschine, vorzugsweise Bodenverdichter, umfassend ein hydraulisches Antriebssystem (24) nach einem der Ansprüche 1-14.
